# EUROPÄISCHE PATENTANMELDUNG

(11) **EP 1 832 989 A1**
(43) Veröffentlichungstag der Anmeldung: **12.09.2007**
(21) Anmeldenummer: 06090033.9
(22) Anmeldetag: 10.03.2006
(51) Int. Cl.: G06F 17/30

(54) **Verfahren, Computersystem und Computerprogramm zur Verarbeitung eines strukturierten Datensatzes**

(71) Anmelder: Technische Fachhochschule Wildau, 15745 Wildau (DE)
(72) Erfinder: Fricke, Armin, Prof. Dr., 14532 Kleinmachnow (DE)
(74) Vertreter: Gross, Felix

(57) **Zusammenfassung**

Die Erfindung betrifft ein Computersystem zur Verarbeitung eines strukturierten Datensatzes, mit einer Kommunikationseinrichtung zum Abrufen und Versenden des strukturierten Datensatzes, einer Datenbankeinrichtung zum Speichern des strukturierten Datensatzes und einer Analyseeinrichtung zum Verarbeiten des strukturierten Datensatzes. Der strukturierte Datensatz enthält hierbei eine Anzahl von in beliebiger Weise im strukturierten Datensatz angeordneten Kenninformationen. Die Erfindung ist dadurch gekennzeichnet, dass die Analyseeinrichtung (130) Mittel zur automatischen Analyse (131) der im strukturierten Datensatz (1, 11-20) enthaltenen Kenninformationen, Mittel zur automatischen Klassifizierung (132) des strukturierten Datensatzes (1, 11-20), mittels derer der strukturierte Datensatz (1, 11-20) anhand der Kenninformationen in eine Klasse einteilbar ist, und Mittel zur automatischen Auswertung (133) des in eine Klasse eingeteilten strukturierten Datensatzes (1, 11-20), mittels derer der strukturierte Datensatz (1, 11-20) anhand der Kenninformationen mit anderen strukturierten Datensätzen (1, 11-20) derselben oder anderer Klassen verknüpfbar ist, aufweist. Die Erfindung betrifft darüber hinaus ein Verfahren und ein Computerprogramm zur Verarbeitung eines strukturierten Datensatzes. Die Erfindung stellt somit ein Computersystem und ein Verfahren zur Verfügung, mittels derer Prozesse, die auf dem Austausch nicht-standardisierter strukturierter Datensätze basieren, messbar gemacht werden können, um eine Optimierung und Automatisierung solcher Prozesse zu ermöglichen.

## Beschreibung

Die Erfindung betrifft ein Computersystem zur Verarbeitung eines strukturierten Datensatzes nach dem Oberbegriff des Anspruchs 1, ein Verfahren zur Verarbeitung eines strukturierten Datensatzes nach dem Oberbegriff des Anspruchs 9 und ein Computerprogramm zur Durchführung des Verfahrens.

Ein solches Computersystem weist eine Kommunikationseinrichtung zum Abrufen und Versenden eines strukturierten Datensatzes, eine Datenbankeinrichtung zum Speichern des strukturierten Datensatzes und eine Analyseeinrichtung zum Verarbeiten des strukturierten Datensatzes auf. Das Computersystem kann zu diesem Zweck beispielsweise einen Mailserver, einen FTP-Server oder einen anderen Datenserver umfassen, über den strukturierte Datensätze auf elektronischem Wege von einem weiteren Computersystem empfangen werden, um weiterverarbeitet zu werden. Die Kommunikation zwischen den unterschiedlichen Computersystemen erfolgt hierbei in bekannter Weise über Telekommunikationsnetzwerke, beispielsweise das Internet, durch den Austausch von strukturierten Datensätze, in denen in beliebiger, nicht-standardisierter Weise im strukturierten Datensatz angeordnete Kenninformationen enthalten sind. Solche Datensätze werden auch als strukturierte, nicht-standardisierte Datensätze bezeichnet. Strukturierter Datensätze in diesem Sinne können beispielsweise E-Mails oder beliebige andere elektronische Dateien sein, die zum Zwecke der Kommunikation zwischen Computersystemen über das Internet ausgetauscht werden.

Der Austausch strukturierter Datensätze zum Zwecke der Kommunikation spielt in verschiedensten Bereichen des öffentlichen Lebens eine immer stärkere Rolle. Durch den Austausch von solchen Datensätzen können insbesondere Prozesse beschrieben, gesteuert und geregelt werden. Als Prozess in diesem Zusammenhang wird ein mehrere Prozessschritte umfassender Prozess bezeichnet, in dessen Rahmen strukturierte Datensätze ausgetauscht werden. Insbesondere kann ein solcher Prozess ein Geschäftsprozess, ein Kommunikationsprozess, ein Regelungsprozess oder ein Herstellungs- oder Fertigungsprozess sein. Die in den strukturierten Datensätzen enthaltenen Kenninformationen können dann solche Parameter sein, die beispielsweise den Prozess beschreiben oder zur Steuerung des Prozesses dienen.

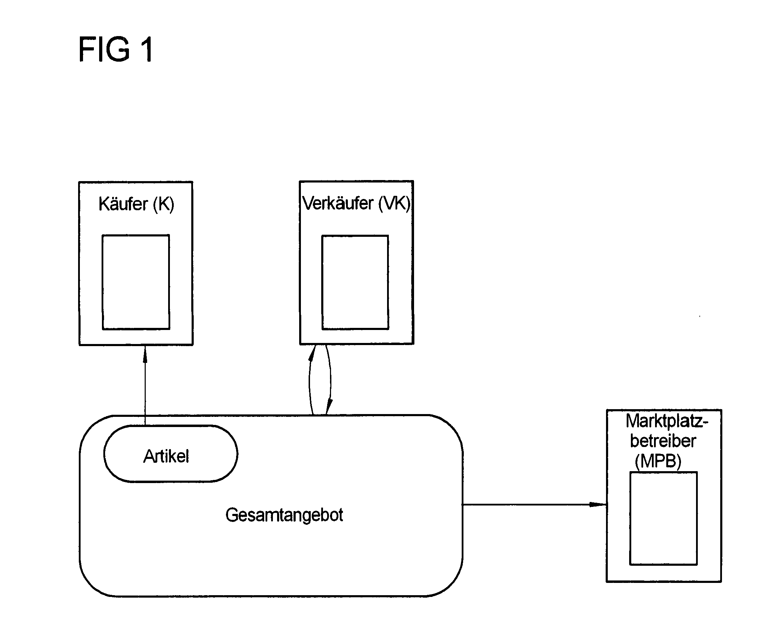

Im Folgenden soll ein solcher Prozess beispielhaft anhand der Kommunikation auf elektronischen Marktplätzen veranschaulicht werden, dessen grundlegendes Szenario in Fig. 1 dargestellt ist. Bei einer Transaktion auf einem von einem Marktplatzbetreiber MPB betriebenen elektronischen Marktplatz wird von einem Verkäufer VK ein Artikel über den elektronischen Marktplatz angeboten. Ein Interessent I kann dieses Angebot über ein elektronisches Netz abrufen und erwerben und wird somit zum Käufer K. Die dreiseitige Kommunikation zwischen dem Verkäufer VK, dem Käufer K und dem Marktplatzbetreiber MPB (die zusammengefasst als Marktplatzteilnehmer MPT bezeichnet werden) erfolgt hierbei automatisiert durch den Austausch strukturierter Datensätze.

Für die Kommunikation zwischen den MPT werden traditionell standardisierte Kommunikationsprotokolle wie zum Beispiel Electronic Data Interchange (EDI) oder eXtensible Markup Language (XML) verwendet. EDI ist der Austausch von elektronischen Daten zwischen unterschiedlichen Computersystemen über ein elektronisches Übertragungsmedium basierend auf einem Format, das von allen Teilnehmern verstanden wird. Auf EDI basieren zahlreiche Sub-Standards, wie zum Beispiel UN/EDIFACT (United Nations Electronic Data Interchange For Administration, Commerce, Transport), SWIFT (Society for Worldwide Interbank Financial Telecommunications) und ODETTE (Organization for Data Exchange Through Teletransmission in Europe). XML bietet einen Standard zur Definition von allgemeinen Datenstrukturen und zur Darstellung von Instanzen der Datenstrukturen. XML ist aber nur ein Austauschformat und kein Standard auf Anwendungsebene. Auf der Basis von XML wurden zahlreiche Sprachen zur Kommunikation zwischen Anwendungen abgeleitet, wie zum Beispiel Simple Object Access Protocol (SOAP) oder ebXML zur Entwicklung eines XML-basierten Rahmens für B2B E-Commerce (business to business electronic commerce).

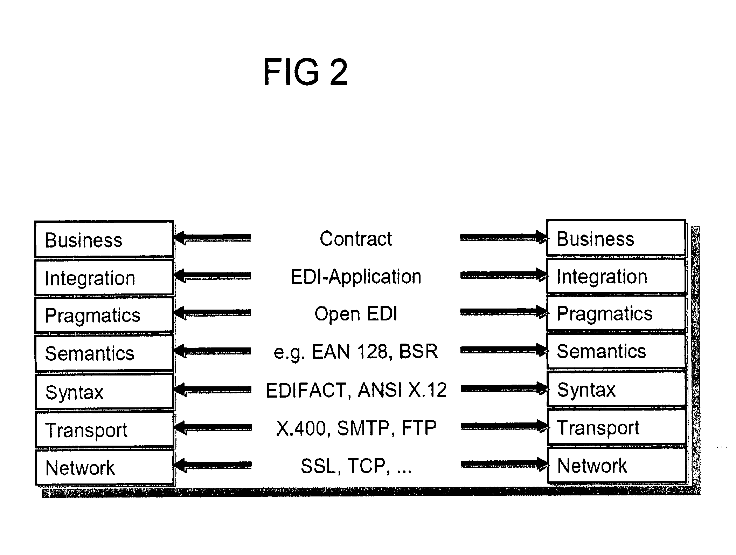

Die Implementierung der genannten und weiterer hier nicht genannter Standards und Sprachen in Anwendungsprogrammen der MPT kann auf verschiedenen Ebenen einer Lösung zur Verarbeitung elektronischer Daten in Form strukturierter Datensätze erfolgen. Die existierenden, die unterschiedliche Ebenen der Kommunikation betreffenden Standards sind beispielhaft und schematisch in der Fig. 2 dargestellt. Unter Ebenen werden hier die die Kommunikation definierenden technischen (Network, Transport) und inhaltlichen (Syntax, Semantics, Pragmatics, Integration, Business) Aspekte verstanden. Wie aus Fig. 2 ersichtlich ist, ermöglicht eine Anwendung auf der Basis von EDI eine inhaltlich standardisierte Kommunikation auf der Ebene "Integration", während eine Anwendung auf der Basis der neueren Standards XML oder SOAP oder ebXML auf eine inhaltlich standardisierte Kommunikation zwischen den MPT der Ebene "Business" ermöglicht. Bestehende Systeme verwenden zur Kommunikation hierbei strukturierte standardisierte Datensätze, in denen Kenninformationen an definierten Positionen angeordnet sind und mittels derer die Kommunikation und der Datenaustausch zwischen den MPT vereinheitlicht sind. Die Implementierung ist aufwendig und erfolgt in der Regel im Rahmen umfangreicher Kommunikationssysteme. Diese Kommunikationssysteme werden daher ausschließlich von gewerblichen MPT genutzt, die (erstens) aufgrund ihres Bestellvolumens oder ihrer Bestellhäufigkeit mit (zweitens) einem festen Kreis von Kunden automatisiert kommunizieren wollen. Für die Nutzung bei Transaktionen mit Endkunden (B2C: business to consumer) oder mit kleinen gewerblichen Kunden (B2B: business to business) (gemeinsam als "Kleinkunden" bezeichnet), die über keine umfangreichen Kommunikationssysteme verfügen oder zu denen keine dauernde Beziehung besteht, sind diese Standards ungeeignet und werden nicht verwendet.

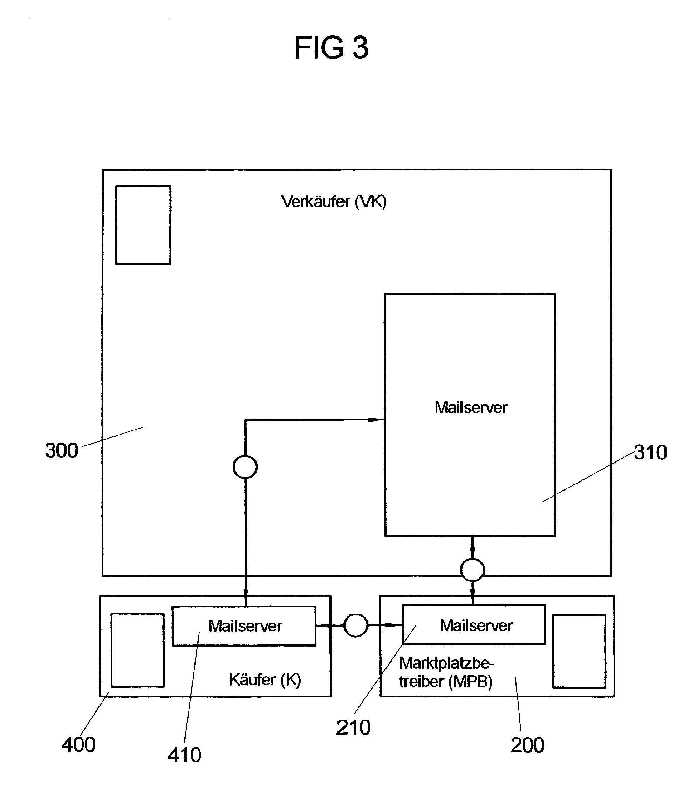

MPT, die solche Kommunikationssysteme zur Kommunikation mittels standardisierter strukturierter Datensätze aus wirtschaftlichen Gründen nicht einsetzen können, können nur nicht-standardisierte strukturierte Datensätze, beispielsweise in Form von E-Mails (entsprechend dem Protokoll "SMTP" auf der Ebene "Transport" in Fig. 2) verwenden. Die Kommunikation zwischen den MPT heutiger elektronischer Marktplätze für private Endkunden (B2C) und kleine gewerbliche Kunden (B2B) erfolgt daher weitgehend durch den Austausch nicht-standardisierter Datensätze, beispielsweise per E-Mail über die (auf Transportebene genormten und daher strukturierten) Protokolle SMTP (zum Senden der strukturierten Datensätze) und POP3 bzw. IMAP4 (zum Empfangen der strukturierten Datensätze) über so genannte Mailserver, wie schematisch in Fig. 3 dargestellt ist.

Die vorangehende Darstellung eines Prozesses anhand eines Verkaufsprozesses auf einem elektronischen Marktplatz ist hier lediglich beispielhaft gewählt. Prinzipiell können in diesem Zusammenhang alle Prozesse betroffen sein, bei denen eine Kommunikation durch den Austausch nicht-standardisierter strukturierter Datensätze erfolgt, die Kommunikation also nicht standardisiert ist. Beispielsweise können solche Prozesse unter Verwendung nicht-standardisierter strukturierter Datensätze auch bei einer Produktionskette im Rahmen eines Fertigungsprozesses, insbesondere bei einer automatisierten Fertigung an räumlich getrennten Orten mit unterschiedlichen Prozessteilnehmern, relevant sein.

Bei einer Kommunikation zwischen Computersystemen mittels nicht-standardisierter strukturierter Datensätze ist nachteilig, dass herkömmlicherweise keine integrierte, gesamtheitliche Sicht auf die jeweiligen durch die strukturierten Datensätze beschriebenen Prozesse möglich ist. Die Prozesse sind hierbei in der Regel dadurch gekennzeichnet, dass sie asynchron ablaufen und vielfach verzweigt sein können, wobei es bei einer Vielzahl von zwischen Computersystemen ausgetauschten Datensätzen zu erheblichen Anforderungen an die verwendeten Computersysteme, insbesondere hinsichtlich Speicherplatzbedarf und Rechenleistung, kommen kann. Eine automatische und effiziente Archivierung der im Rahmen eines Prozesses ausgetauschten Datensätze ist in nicht möglich. Da die Kommunikation nicht standardisiert ist, sind die Prozesse zudem in der Regel nicht messbar, also nicht mit bestimmten Normwerten vergleichbar, und können somit nicht automatisiert werden. Daraus folgt, dass eine automatische Adaption der Prozesse ("selbst-lernendes System") zur Optimierung nicht möglich ist.

Ein grundlegendes Problem bei solchen nicht standardisiert ablaufenden Prozessen besteht somit darin, dass die Prozesse langsam und ineffizient sind, hohe Anforderungen an die Verwendeten Computersysteme, insbesondere hinsichtlich ihres Speicherplatzes stellen und zudem wegen der mangels Automatisierbarkeit erforderlichen menschlichen Interaktion fehleranfällig sind.

Die der vorliegenden Erfindung zugrunde liegende Aufgabe besteht darin, ein Verfahren, ein Computersystem und ein Computerprogramm zur Verfügung zu stellen, mittels derer Prozesse, die auf dem Austausch nicht-standardisierter strukturierter Datensätze basieren, messbar gemacht werden können, um eine Optimierung und Automatisierung solcher Prozesse zu ermöglichen.

Diese Aufgabe wird durch einen Gegenstand mit den Merkmalen des Anspruchs 1 gelöst.

Erfindungsgemäß ist hierbei vorgesehen, dass ein Computersystem zur Verarbeitung eines strukturierten Datensatzes, mit
- einer Kommunikationseinrichtung zum Abrufen und Versenden des strukturierten Datensatzes,
- einer Datenbankeinrichtung zum Speichern des strukturierten Datensatzes,
- einer Analyseeinrichtung zum Verarbeiten des strukturierten Datensatzes,
wobei der strukturierte Datensatz eine Anzahl von in beliebiger Weise im strukturierten Datensatz angeordnete Kenninformationen enthält, dadurch gekennzeichnet ist, dass die Analyseeinrichtung
- Mittel zur automatischen Analyse der im strukturierten Datensatz enthaltenen Kenninformationen,
- Mittel zur automatischen Klassifizierung des strukturierten Datensatzes, mittels derer der strukturierte Datensatz anhand der Kenninformationen in eine Klasse einteilbar ist, und
- Mittel zur automatischen Auswertung des in eine Klasse eingeteilten strukturierten Datensatzes, mittels derer der strukturierte Datensatz anhand der Kenninformationen mit anderen strukturierten Datensätzen derselben oder anderer Klassen verknüpfbar ist,
aufweist.

Mit dem erfindungsgemäßen Computersystem wird somit eine Vorrichtung zur Verfügung gestellt, mit der strukturierte Datensätze, in denen in beliebiger, nicht-standardisierter Weise angeordnete Kenninformationen enthalten sind, verarbeitet werden können. Kenninformationen in diesem Zusammenhang können sämtliche Informationen und Parameter sein, die einen Prozess beschreiben, steuern und/oder auf sonstige Weise einem Prozess zugehörig sind. Bei einem Verkaufsprozess können dies insbesondere Angaben über einen verkauften Artikel, einen Käufer, einen Verkäufer, die Prozessdauer, den Prozessbeginn, das Prozessende, Zahlungsmodalitäten, zugehörige andere Prozesse oder andere Informationen den Prozess betreffende Informationen sein. Bei einem Fertigungsprozess kann es sich entsprechend um Angaben über die Prozessdauer, den Prozessbeginn, dass Prozessende, technische Prozessparameter (den Prozess beschreibende Messwerte, Funktionsparameter etc.), Stückzahl, Maschineninformationen (Art der Maschine, Maschinenzustände, Fehlerinformationen) und dergleichen handeln. Wesentlich ist hierbei, dass im Rahmen eines Prozesses strukturierte Datensätze mit Kenninformationen im Rahmen eines Prozesses ausgetauscht werden, wobei das Wesen des Prozesses an sich unerheblich ist.

Die Erfindung löst die zugrunde liegende Aufgabe, nämlich einen nicht-standardisierten Prozess messbar zu machen, damit, dass die Analyseeinrichtung die in beliebiger Weise im strukturierten Datensatz enthaltenen Kenninformationen ausliest und somit automatisch erfasst, anhand der Kenninformationen den strukturierten Datensatz in eine Klasse einteilt und den in eine Klasse eingeteilten strukturierten Datensatz mit anderen strukturierten Datensätzen derselben oder anderer Klassen verknüpft. Die Analyseeinrichtung des Computersystems liest somit die im strukturierten Datensatz verteilten Kenninformationen aus und verarbeitet den strukturierten Datensatz in automatischer Weise. Der strukturierte Datensatz wird dabei einer Klasse zugewiesen, wobei eine Klasse einen Prozessschritt eines Prozesses beschreiben kann, so dass der strukturierte Datensatz durch die Zuordnung zu einer Klasse in den Rahmen eines Prozesses eingeordnet wird. Bei einem Verkaufsprozess können diese Klassen beispielsweise durch "Kaufen", "Verkaufen", "Bezahlen", "Versenden", "Beschwerde" oder dergleichen überschrieben sein und strukturierten Datensätze umfassen, die der so thematisierten Klasse zugehörig sind. Bei einem Fertigungsprozess können die Klassen entsprechend beispielsweise durch die Prozessschritte "Montage", "Testen", "Endabnahme", aber auch in feinerer Gliederung durch die Schritte "Zusammenfügen zweier Teile", "Setzen einer Schweißverbindung", "Bilden eines Kontaktes" oder dergleichen gebildet sein.

Wesentlich für die Erfindung ist, dass die in beliebiger, undefinierter und nicht-standardisierter Weise im Datensatz angeordneten Kenninformationen automatisch ausgewertet werden und der strukturierte Datensatz anhand dieser Kenninformationen weiterverarbeitet wird, indem er einer Klasse zugeteilt und mit anderen strukturierten Datensätzen verknüpft wird. Auf diese Weise lassen sich Prozesse, in deren Rahmen der strukturierte Datensatz ausgetauscht wird, beschreiben und insbesondere in ihrer Gesamtheit darstellen, indem durch die Verknüpfung der strukturierten Datensätze die durch die strukturierten Datensätze repräsentierten Prozessschritte zusammengefügt und somit veranschaulicht werden.

Wesentlicher Vorteil der Erfindung ist, dass Prozesse jeglicher Art mittels des erfindungsgemäßen Computersystems erfasst und auf automatische Weise dargestellt werden können und die Prozesse somit messbar gemacht werden. Auf diese Weise lassen sich Prozesse auf automatische Weise auswerten, analysieren und optimieren. Insbesondere ist es möglich, mit Hilfe des erfindungsgemäßen Computersystems Prozessabläufe effizienter zu gestalten, zu beschleunigen und hinsichtlich ihres Ablaufes und ihrer technischen Anforderungen, beispielsweise Speicherplatzbedarf und Rechenleistung, zu optimieren.

Das Computersystem kann hierbei eine Schnittstelle darstellen, die zur Auswertung von strukturierten Datensätzen zwischen einem zweiten Computersystem, von dem ein strukturierter Datensatz oder eine Menge von strukturierten Datensätzen abgerufen werden, und einem dritten Computersystem, an das die verknüpften strukturierten Datensätze zusammen mit ausgewerteten, einen Prozess beschreibenden Informationen übermittelt werden, angeordnet ist. In diesem Fall fungiert das Computersystem als verbindendes Medium zwischen den weiteren Computersystemen, wobei das Computersystem die zwischen den weiteren Computersystemen ausgetauschten strukturierten Datensätze, in denen Kenninformationen in beliebiger, dem anderen Computersystem jeweils unbekannter Weise angeordnet sind, auswertet und bewertet und die in den strukturierten Datensätzen enthaltenen Kenninformationen einem oder beiden der weiteren Computersysteme zur Verfügung stellt. Das Computersystem stellt in diesem Fall eine Instanz zwischen den weiteren Computersystemen dar, das auf automatische Weise eine Auswertung der zwischen den weiteren Computersystemen zum Zweck der Kommunikation ausgetauschten strukturierten Datensätze vornimmt. Wesentlicher Vorteil hierbei ist, dass das dritte Computersystem nicht lediglich einen strukturierten Datensatz erhält, sondern ihm von dem Computersystem die ausgewerteten Informationen über den durch den strukturierten Datensatz betroffenen Prozess und die den Prozess betreffenden relevanten Kenninformationen zur Verfügung gestellt werden.

Die Kommunikationseinrichtung des Computersystems, die den elektronischen Austausch der strukturierten Datensätze mit den weiteren Computersystemen vornimmt, kann beispielsweise ein Mailserver, ein FTP-Server oder eine andere Einrichtung zur Übermittlung elektronischer Daten sein. Die Kommunikationseinrichtung stellt hierbei die Kommunikation mit den weiteren Computersystemen auf automatische, elektronische Weise her.

Bevorzugt weist die Analyseeinrichtung des Computersystems Mittel zur Auswertung der verknüpften strukturierten Datensätze auf, mittels derer die sich durch die Verknüpfung der strukturierten Datensätze ergebene Datenstruktur analysiert und beispielsweise einem Prozess zugeordnet wird, so dass anhand der Verknüpfung der strukturierten Datensätze eine Identifizierung eines Prozesses möglich ist. Hierbei wird davon ausgegangen, dass jeder strukturierte Datensatz, der durch das Computersystem verarbeitet wird, einem Prozessschritt eines Prozesses zugehörig ist und durch das Verknüpfen der strukturierten Datensätze der Prozess in seiner Gesamtheit abbildbar ist.

Vorteilhafterweise weist das Computersystem darüber hinaus eine Ausgabeeinheit zur Darstellung der verknüpften strukturierten Datensätze auf, mittels derer beispielsweise ein durch die verknüpften strukturierten Datensätze beschriebener Prozess abgebildet werden kann.

Insbesondere kann die Ausgabeeinheit hierbei durch einen Webserver ausgebildet sein, mittels dessen die erfassten Kenninformationen und die durch die Verknüpfung der strukturierten Datensätze ermittelten Informationen über einen Prozess einem Anwender auf elektronischem Wege über ein Informationsnetzwerk, in diesem Fall das Internet zur Verfügung gestellt werden.

Zudem kann das Computersystem ein Benachrichtigungssystem zur Benachrichtigung eines Anwenders bei Auftreten eines anhand der verknüpften strukturierten Datensätze ermittelten Fehlers in einem durch die verknüpften strukturierten Datensätze dargestellten Prozess aufweisen. Insbesondere kann hierbei, wenn anhand der einen Prozess darstellenden strukturierten Datensätze, die durch die Analyseeinrichtung miteinander verknüpft werden, festgestellt wird, dass im Rahmen des Prozesses ein Fehler aufgetreten ist, weil beispielsweise ein Prozessschritt nicht oder nur unvollständig oder verspätet durchgeführt worden ist, dieser Fehler über das Benachrichtigungssystem einem Anwender unmittelbar angezeigt und der Anwender somit frühzeitig auf Fehlfunktionen im Prozesses hingewiesen werden. Durch einen Eingriff des Anwenders kann dann der Fehler im Prozess entweder unmittelbar behoben oder - bei frühzeitigem Erkennen eines drohenden Fehlers - diesem unmittelbar entgegen gewirkt werden.

Das Benachrichtigungssystem kann in diesem Zusammenhang beispielsweise durch eine Telekommunikationseinrichtung zur Kommunikation mit einem Anwender ausgebildet sein, wobei die Telekommunikationseinrichtung beispielsweise mit einer weiteren, insbesondere mobilen Telekommunikationseinrichtung des Anwenders zusammenwirkt. Das Benachrichtigungssystem kann beispielsweise den Anwender über dessen Mobiltelefon automatisch benachrichtigen, indem eine Textnachricht in Form einer SMS erzeugt und an den Anwender übersandt wird.

Die Aufgabe wird darüber hinaus durch ein Verfahren zur Verarbeitung eines strukturierten Datensatzes mit den Merkmalen des Anspruchs 9 gelöst.

Erfindungsgemäß ist hierbei vorgesehen, dass ein Verfahren zur Verarbeitung eines strukturierten Datensatzes, unter Verwendung eines Computersystems nach einem der Ansprüche 1 bis 8, bei dem der strukturierte Datensatz abgerufen, gespeichert und verarbeitet wird, wobei der strukturierte Datensatz eine Anzahl von in beliebiger Weise im strukturierten Datensatz angeordneten Kenninformationen enthält, dadurch gekennzeichnet ist, dass
- die im strukturierten Datensatz enthaltenen Kenninformationen automatisch erfasst werden,
- der strukturierte Datensatz anhand der Kenninformationen automatisch einer Klasse zugeordnet wird, und
- der strukturierte Datensatz anhand der Kenninformationen automatisch mit anderen strukturierten Datensätzen verknüpft wird.

Durch das erfindungsgemäße Verfahren wird somit die Möglichkeit geschaffen, strukturierte Datensätze, die in beliebiger, nicht-standardisierter Weise angeordnete Kenninformationen enthalten, auf automatische Weise analysiert und verarbeitet werden. Im Einzelnen werden hierbei die in unbekannter Weise im strukturierten Datensatz enthaltenen Kenninformationen ermittelt und der strukturierte Datensatz anhand dieser Kenninformationen dann einer Klasse zugeordnet und mit anderen strukturierten Datensätzen verknüpft. In der Regel ist hierbei vorab weder bekannt, welche Kenninformationen in den strukturierten Datensätzen vorhanden sind, noch in welcher Art und Weise die Kenninformationen in den strukturierten Datensätzen angeordnet sind. Zunächst wird somit im Rahmen des Verfahrens erfasst, welche Kenninformationen mit dem strukturierten Datensatz übermittelt wurden und welche Bedeutung und/oder Wert diese Kenninformationen haben. Anhand dieser Kenninformationen erfolgt dann automatisch die Zuteilung des strukturierten Datensatzes zu einer Klasse, wobei eine Klasse hierbei einen Prozessschritt eines Prozesses darstellen kann. Indem der einer Klasse zugeordnete strukturierte Datensatz dann mit anderen strukturierten Datensätzen verknüpft wird, ist der Prozess, der durch einzelne Prozessschritte definiert ist, dann in seiner Gesamtheit darstellbar und anhand der in den strukturierten Datensätzen enthaltenen Kenninformationen beschreibbar und messbar.

Der in dem Verfahren verarbeitete strukturierte Datensatz kann hierbei insbesondere einen standardisierten strukturierten Teil, in dem Kenninformationen in definierter Weise angeordnet sind, und einen nicht-standardisierten strukturierten Teil, in dem Kenninformationen in beliebiger Weise angeordnet sind, aufweisen.

Im Rahmen des Verfahrens wird der strukturierte Datensatz dann zur Erfassung der im strukturierten Datensatz enthaltenen Kenninformationen vorteilhafterweise zunächst in seinen standardisierten strukturierten Teil und seinen nicht-standardisierten strukturierten Teil zerlegt.

Die Erfassung der im strukturierten Datensatz enthaltenen Kenninformationen erfolgt dann, indem der standardisierte strukturierte Teil und der nicht-standardisierte strukturierte Teil des strukturierten Datensatzes getrennt ausgewertet werden. Bei einer Vielzahl von zur elektronischen Kommunikation verwendeten strukturierten Datensätzen ist eine solche Teilung in einen standardisierten strukturierten und einen nicht-standardisierten strukturierte Teil vorgesehen. Der standardisierte strukturierte Teil wird in diese Zusammenhang auch als "Header" bezeichnet, während der nicht-standardisierte strukturierte Teil "Body" genannt wird. Mittels des Verfahrens werden dann die Kenninformationen, die sowohl im standardisierten strukturierten als auch im nicht-standardisierten strukturierten Teil des strukturierten Datensatzes enthalten sind, automatisch ausgewertet, wobei die Anordnung der Kenninformationen im standardisierten strukturierten Teil vorab bekannt ist, während die Struktur des nicht-standardisierten strukturierten Teils vorab nicht bekannt und somit im Rahmen der Auswertung erst ermittelt wird.

Wie oben bereits erläutert, wird im Rahmen des Verfahrens der strukturierte Datensatz anhand der im strukturierten Datensatz enthaltenen Kenninformationen automatisch einer Klasse zugeordnet, die einen Prozessschritt eines Prozesses charakterisiert. Grundgedanke ist hierbei, dass die strukturierten Datensätze Teil eines einen Kommunikationsprozess ausbildenden Prozesses sind und jeweils einem oder mehreren Prozessschritten zugeordnet werden. Die Prozessschritte sind hierbei in Klassen einteilbar und durch die Klassen beschrieben. im Rahmen des Verfahrens werden die strukturierten Datensätze, die einer Klasse zugeordnet sind, mit anderen strukturierten Datensätzen verknüpft. Durch die Verknüpfung der strukturierten Datensätze kann sich hierbei eine zusammenhängende Datensatzstruktur in Form einer Kette ergeben, die linear oder auch verzweigt ausgebildet sein kann.

Die verknüpften strukturierten Datensätze stellen dann einen Prozess dar, der einen oder mehrere Prozessschritte umfasst und deren Verknüpfung und Ablauf durch die Verknüpfung der strukturierten Datensätze abbildbar ist.

Anhand der verknüpften strukturierten Datensätze und der in den strukturierten Datensätzen enthaltenen Kenninformationen ist es somit nunmehr möglich, den durch die verknüpften strukturierten Datensätze beschriebenen Prozess zu identifizieren, indem von der durch die Verknüpfung erzeugten Abbildung auf den zugrunde liegenden Prozess zurückgeschlossen wird.

Darüber hinaus ist es möglich, den durch die verknüpften strukturierten Datensätze beschriebenen Prozess auszuwerten und im Rahmen der Auswertung alle Informationen zu erfassen, die den Prozess beschreiben und mit dem Prozess zusammenhängen.

Abhängig von der Auswertung des Prozesses können die den Prozess ausbildenden, verknüpften strukturierten Datensätze dann gespeichert, gelöscht und/oder weiter verarbeitet werden. Die Auswertung des Prozesses erfolgt hierbei auf automatische Weise, wobei durch die Auswertung des Prozesses festgestellt wird, welche Maßnahmen zur Verarbeitung der strukturierten Datensätze notwendig oder zweckdienlich sind. Auf diese Weise ist beispielsweise eine automatische Archivierung aller einen Prozess beschreibenden strukturierten Datensätze und somit eine effiziente Speicherverwaltung möglich.

Des Weiteren ist anhand der verknüpften strukturierten Datensätze und der in den strukturierten Datensätzen enthaltenen Kenninformationen, die durch die Auswertung der strukturierten Datensätze auf automatische Weise erfasst worden sind, der durch die strukturierten Datensätze beschriebene Prozess mit vorab definierten Normwerten vergleichbar. Durch die Analyse und die Auswertung des Prozesses ist der Prozess an sich somit messbar und durch den Vergleich mit bestimmten Normwerten bewertbar.

Insbesondere kann auf diese Weise durch die Auswertung des Prozesses anhand der verknüpften strukturierten Datensätze ein nachfolgend durchzuführender Prozessschritt automatisch identifiziert werden, so dass der Prozess auf automatische Weise fortgeführt werden kann. Im Rahmen des Verfahrens wird dann zunächst anhand der verarbeiteten strukturierten Datensätze ein Prozess identifiziert und gleichzeitig der Status des Prozesses und eine sich daraus ergebende durchzuführende Maßnahme erfasst, die dann auf automatische Weise veranlasst werden kann.

Des Weiteren ist es möglich, anhand der verknüpften strukturierten Datensätze und der in den strukturierten Datensätzen enthaltenen Kenninformationen den durch die strukturierten Datensätze beschriebenen Prozess hinsichtlich mindestens eines Optimierungskriteriums zu optimieren. Der Gedanke hierbei ist, dass durch die Analyse der strukturierten Datensätze, die den Prozess in seiner Gesamtheit beschreiben, Schwachstellen im Prozess, beispielsweise Verzögerungszeiten oder Ungenauigkeiten im Prozess oder in einzelnen Prozessschritten, ermittelt werden, auf die dann in automatischer Weise reagiert werden kann.

Die Optimierungskriterien, anhand derer ein Prozess hierbei optimierbar ist, können beispielsweise durch die Prozessdauer, die Prozessgeschwindigkeit und/oder den Prozessablauf dargestellt sein. Denkbar ist auch, dass einzelne Prozessschritte anhand der aus den strukturierten Datensätzen erfassten Kenninformationen auf spezifische Weise optimiert werden, um somit durch Optimierung eines Prozessschrittes eine Optimierung des gesamten Prozesses zu erreichen.

In diesem Zusammenhang ist es auch denkbar, dass anhand der verknüpften strukturierten Datensätze Fehler oder Besonderheiten eines Prozesses ermittelt werden, die dann einem Anwender unmittelbar angezeigt werden, um somit auf einen Fehlverlauf im Prozess hinzuweisen. Ein solcher Fehler kann beispielsweise in einem einzelnen Prozessschritt oder in der Abfolge der Prozessschritte liegen und somit einen einzelnen Prozessschritt oder den gesamten Prozess betreffen.

Mittels des erfindungsgemäßen Verfahrens werden Prozesse, die durch den Austausch strukturierter Datensätze bedingt und beschreibbar sind, messbar gemacht. Anhand der Auswertung der Prozesse ist dann sowohl eine Analyse eines einzelnen Prozesses hinsichtlich seiner spezifischen, diesen speziellen Prozess betreffenden Merkmale oder eine Auswertung einer Vielzahl von Prozessen hinsichtlich Ihrer statistischen, die Gesamtheit der Prozesse beschreibenden Merkmale möglich. Dadurch, dass die Prozesse an sich messbar gemacht sind, ergibt sich somit eine vollständige Auswertbarkeit der Prozesse sowohl im spezifischen als auch im allgemeinen, statistischen Sinne.

Bei dem Verfahren werden strukturierte Datensätze verarbeitet, in denen Kenninformation in beliebiger, nicht-standardisierter Weise angeordnet sind. Im Rahmen des Verfahrens wird dabei jeweils erfasst, ob und in welcher Weise die Kenninformationen in den strukturierten Datensätzen abgelegt sind. Denkbar ist hierbei, dass im Rahmen des Verfahrens die Struktur eines strukturierten Datensatzes erfasst und gespeichert wird und, wenn ein strukturierter Datensatz mit der gleichen Struktur empfangen wird, der strukturierte Datensatz anhand der gespeicherten Struktur auf effiziente Weise analysiert wird. Im Rahmen des Verfahrens ist es somit möglich, dass die vorab unbekannten Strukturen strukturierter Datensätze erlernt werden, um bei nochmaligem Auftreten vergleichbarer strukturierter Datensätze eine effiziente Verarbeitung der strukturierten Datensätze zu ermöglichen.

Denkbar ist auch, dass Klassen, die Prozessschritte beschreiben, neu erlernt werden. Insbesondere kann hierbei ein strukturierter Datensatz, der keiner Klasse zuordbar ist, automatisch einer neu generierten Klasse zugeordnet werden und die so neu generierte Klasse abgespeichert werden.

Analog kann auch ein vorab unbekannter Prozess auf diese Weise neu erlernt werden, indem die verknüpften strukturierten Datensätze, die keinem Prozess eindeutig zuordbar sind, automatisch einem neu generierten Prozess zugeordnet werden. Es ist dabei zweckmäßig, dass einem Anwender eine Information über neu generierte Klassen und/oder neu generierte Prozesse automatisch mitgeteilt wird.

Die Aufgabe wird darüber hinaus durch ein Computerprogramm zur Verarbeitung eines strukturierten Datensatzes aus einer Menge von strukturierten Datensätzen zur Durchführung des Verfahrens nach einem der Ansprüche 9 bis 28 gelöst, wobei die in den Ansprüchen 9 bis 28 beschriebenen Verfahrensschritte im Rahmen des Computerprogramms implementiert sind und auf einem Computersystem ablaufen.

Der der Erfindung zugrunde liegende Gedanke soll nachfolgend anhand der in den Figuren dargestellten Ausführungsbeispiele näher erläutert werden. Es zeigen:
- Fig. 1: eine schematische Darstellung eines einen elektronischen Marktplatz beschreibenden Szenarios;
- Fig. 2: eine schematische Darstellung unterschiedlicher Standards zur Kommunikation auf unterschiedlichen Ebenen;
- Fig. 3: eine schematische Darstellung der Kommunikation zwischen Teilnehmern eines elektronischen Marktplatzes;
- Fig. 4: eine schematische Darstellung eines strukturierten Datensatzes mit einem standardisierten strukturierten Teil und einem nicht-standardisierten strukturierten Teil;
- Fig. 5: eine schematische Darstellung eines die Erfindung verwirklichenden Computersystems zur Kommunikation mit weiteren Computersystemen;
- Fig. 6: eine schematische Detaildarstellung eines die Erfindung verwirklichenden Computersystems und
- Fig. 7: eine schematische Darstellung eines durch verknüpfte strukturierte Datensätze beschriebenen Prozesses.

Ein grundlegendes Szenario, das beispielhaft die Kommunikation zwischen drei Teilnehmern beschreibt, ist in Fig. 3 dargestellt und zeigt schematisch die Kommunikation zwischen einem Verkäufer VK, einem Käufer K und einem Marktplatzbetreiber MTB auf einem elektronischen Marktplatz. Der Verkäufer VK, der Käufer K und der Marktplatzbetreiber MTB nutzen jeweils ein Computersystem 200, 300, 400, das jeweils einen Mailserver 210, 310, 410 aufweist, mittels dessen die Kommunikation zwischen dem Verkäufer VK, dem Käufer K und dem Marktplatzbetreiber MTB durch den Austausch strukturierter Datensätze abgewickelt wird. Über die Computersysteme 200, 300, 400 werden dabei strukturierte Datensätze von einem Mailserver 210, 310, 410 zu einem anderen Mailserver 210, 310, 410 gesandt und somit Daten zwischen den Computersystemen 200, 300, 400 ausgetauscht und Prozesse abgewickelt. Die Mailserver 210, 310, 410 stellen in diesem Zusammenhang Kommunikationseinrichtungen dar und können beispielsweise auch durch einen FTP-Server oder andere Vorrichtungen zum Austausch elektronischer Daten ausgebildet sein.

Zwar ist bei dem grundlegenden Szenario in Fig. 3 die Kommunikation im Rahmen eines elektronischen Marktplatzes dargestellt. Dieses dient jedoch lediglich zur Veranschaulichung, ohne die Allgemeinheit zu beschränken. Beispielsweise kann ein ähnliches Szenario auch die Kommunikation im Rahmen eines Fertigungsprozesses unter Beteiligung unterschiedlicher Maschinen, Anlagen und Vorrichtungen, beschreiben, wobei die Computersysteme 200, 300, 400 jeweils steuernd mit einer Anlage oder einer Maschine verbunden sind und der Fertigungsprozess an sich durch die Kommunikation zwischen den Computersystemen 200, 300, 400 gesteuert wird.

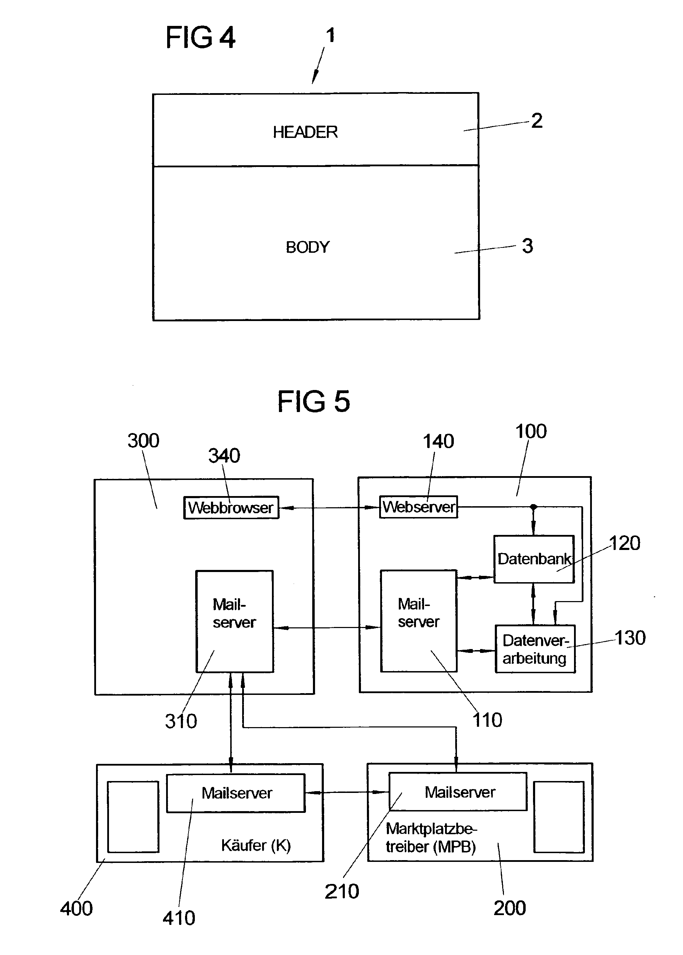

Die Erfindung betrifft ein Computersystem, ein Verfahren und ein Computerprogramm zur Verarbeitung strukturierter Datensätze, die im Rahmen eines Prozesses ausgetauscht werden und somit den wesentlichen Inhalt des Prozesses darstellen. Die Struktur eines solchen strukturierten Datensatzes ist beispielhaft in Fig. 4 dargestellt. Der strukturierte Datensatz 1 weist hierbei einen standardisierten strukturierten Teil 2, den so genannten Header und einen nicht-standardisierten strukturierten Teil 3, den so genannten Body, auf. Im standardisierten strukturierten Teil 2 sind hierbei in definierter, durch einen Standard (beispielsweise dem dem SMTP-Protokoll zugrunde liegenden Standard) festgelegter Weise Kenninformationen abgelegt und in definierter Weise angeordnet. Im nicht-standardisierten strukturierten Teil 3 hingegen sind Kenninformationen in vorab nicht bekannter, beliebiger Weise angeordnet, so dass vorab nicht bekannt ist, ob eine bestimmte Kenninformation im strukturierten Datensatz 1 enthalten ist und, wenn die Kenninformation in dem strukturierten Datensatz 1 enthalten ist, an welcher Stelle diese im nicht-standardisierten strukturierten Teil 3 des strukturierten Datensatzes 1 zu finden ist. Zu den Kenninformationen können hierbei sämtliche Informationen zählen, die einen Prozess beschreiben und für einen Prozess relevant sind. Beispielsweise können solche Kenninformationen bei einem Verkaufsprozess Angaben über den Käufer, den Verkäufer, den Artikel, die Zahlungsmodalitäten, die Lieferbedingungen, die Vertragsbedingungen, die Kaufzeit, die Lieferzeit, eventuelle Verwicklungen oder Komplikationen im Prozess und dergleichen sein. Bei einem Fertigungsprozess können die Kenninformationen insbesondere Informationen über Fertigungsbedingungen, Fertigungsfortschritt, Fertigungsparameter, den Status einzelner Fertigungsschritte, Maschinenparameter und -zustände und dergleichen sein. Letztendlich zählen zu den Kenninformation alle Informationen, die in irgendeiner Weise einen Prozess beschreiben und/oder einem Prozess zugehörig sind.

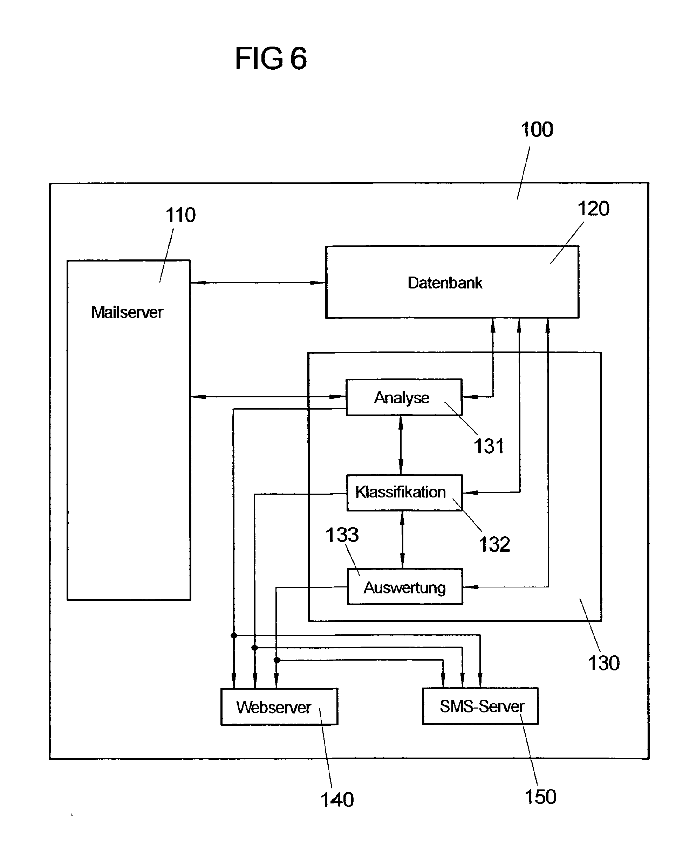

In Fig. 5 ist eine beispielhafte Ausführungsform des erfindungsgemäßen Computersystems 100 dargestellt, das mit dem Computersystem 300 eines Anwenders, zusammenwirkt, indem es strukturierte Datensätze 1 vom Computersystem 300 erhält, diese auswertet und die ausgewerteten strukturierten Datensätze 1 mitsamt den erfassten Informationen an das Computersystem zurücksendet. Eine schematische Detailansicht des Computersystems 100 ist darüber hinaus in Fig. 6 gezeigt. Das erfindungsgemäße Computersystem weist eine Kommunikationseinrichtung in Form eines Mailservers 110, eine Datenbankeinrichtung in Form einer Datenbank 120, eine Analyseeinrichtung in Form einer Datenverarbeitung 130 und eine Ausgabeeinheit in Form eines Webservers 140 auf. Darüber hinaus kann, wie in Fig. 6 dargestellt, das Computersystem 100 ein Benachrichtigungssystem in Form eines SMS-Servers 150 enthalten. Die Analyseeinrichtung 130 weist hierbei im Einzelnen Mittel 131 zur Analyse eines strukturierten Datensatzes 1, Mittel 132 zur Klassifikation des strukturierten Datensatzes 1 und Mittel 133 zur Auswertung des strukturierten Datensatzes 1 auf.

Der durch das Computersystem 100 durchgeführte Ablauf zur Auswertung eines strukturierten Datensatzes 1 erfolgt folgendermaßen: Im Rahmen eines Prozesses werden zwischen den Computersystemen 200, 300, 400 strukturierte Datensätze 1 ausgetauscht, Durch die strukturierten Datensätze 1 kann hierbei beispielsweise, wie oben erläutert, ein Verkaufsprozess durchgeführt oder ein Fertigungsprozess gesteuert werden. Das die Erfindung verwirklichende Computersystem 100 ist hierbei mit dem Computersystem 300 verbunden und ruft über seine Kommunikationseinrichtung in Form des Mailservers 110 strukturierte Datensätze 1 von der Kommunikationseinrichtung in Form des Mailservers 310 des Computersystems 300 ab. Prinzipiell ist hierbei auch eine Verbindung des Computersystems 100 mit den Computersystemen 200, 400 der übrigen Teilnehmer denkbar, so dass in dem Fall die strukturierten Datensätze 1 direkt von den Mailservern 210, 410 abgerufen würden oder gar jegliche Kommunikation, also jeglicher Austausch strukturierter Datensätze 1 zwischen den Computersystemen 200, 300, 400 über den Mailserver 110 des Computersystems 100 erfolgen könnte.

Die durch den Mailserver 110 abgerufenen strukturierten Datensätze 1 werden daraufhin in der Datenbank 120 gespeichert und an die Analyseeinrichtung 130 zur Analyse, Klassifikation und Auswertung weitergeleitet. Im Einzelnen wird jeder strukturierte Datensatz 1 hierbei in seinen standardisierten strukturierten Teil 2 und seinen nicht-standardisierten strukturierten Teil 3 zerlegt, und anschließend werden die in den beiden Teilen 2, 3 jeweils gespeicherten Kenninformationen erfasst und ausgewertet. Anhand der so ermittelten Kenninformationen wird der strukturierte Datensatz 1 dann einer Klasse zugeordnet, wobei jede Klasse einen Prozessschritt charakterisiert. Durch die Einteilung in Klassen wird somit festgelegt, dass ein strukturierter Datensatz 1 im Rahmen der Durchführung eines bestimmten Prozessschrittes erstellt wurde und Angaben zu diesem bestimmten Prozessschritt macht. Im Rahmen eines Fertigungsprozesses kann hierbei beispielsweise festgelegt werden, dass ein bestimmter strukturierter Datensatz 1 einem Prozessschritt "Verbindung von Teil A mit Teil B" zugeordnet ist und Informationen über diesen Prozessschritt enthält. Analog kann bei einem Verkaufsprozess hierbei ermittelt werden, dass der strukturierte Datensatz 1 beispielsweise Angaben zu einem Prozessschritt "Auslieferung des Artikels" macht.

Im Rahmen der Auswertung wird anschließend jeder strukturierte Datensatz 1 mit anderen strukturierten Datensätzen verknüpft, wobei die verknüpften strukturierten Datensätze eine zusammenhängende Datenstruktur bilden und in ihrer Gesamtheit einen Prozess vollständig abbilden. Anhand der verknüpften strukturierten Datensätze ist nunmehr der Prozess auswertbar, messbar und mit definierten Normwerten vergleichbar und somit optimierbar. Beispielsweise kann der durch die verknüpften strukturierten Datensätze beschriebene Prozess analysiert werden, um Prozessschritte zu identifizieren, die fehleranfällig oder zeitaufwändig sind, um so gezielt eine Optimierung solcher Prozessschritte zu ermöglichen. Gleichzeitig kann der Prozess in seiner Gesamtheit ausgewertet werden und mit anderen Prozessen verglichen werden, um eine Übersicht über sämtliche ablaufenden Prozesse zu erhalten. Auch ist es möglich, durch die Auswertung der Prozesse Informationen über fehlerhaft ablaufende Prozesse, fehlende Prozessschritte oder drohende Fehler in einem Prozess zu erhalten, auf die dann mittels des Benachrichtigungssystems in Form des SMS-Servers 150 direkt hingewiesen werden kann.

Die Ergebnisse der Analyse, der Klassifikation und der Auswertung der strukturierten Datensätze 1 und der im Rahmen der Verknüpfung ermittelten Informationen können darüber hinaus über den die Ausgabeeinheit ausbildenden Web-Server 140 dem Computersystem 300 eines Anwenders zur Verfügung gestellt werden, der diese Ergebnisse über einen Webbrowser 340 abrufen und einsehen kann.

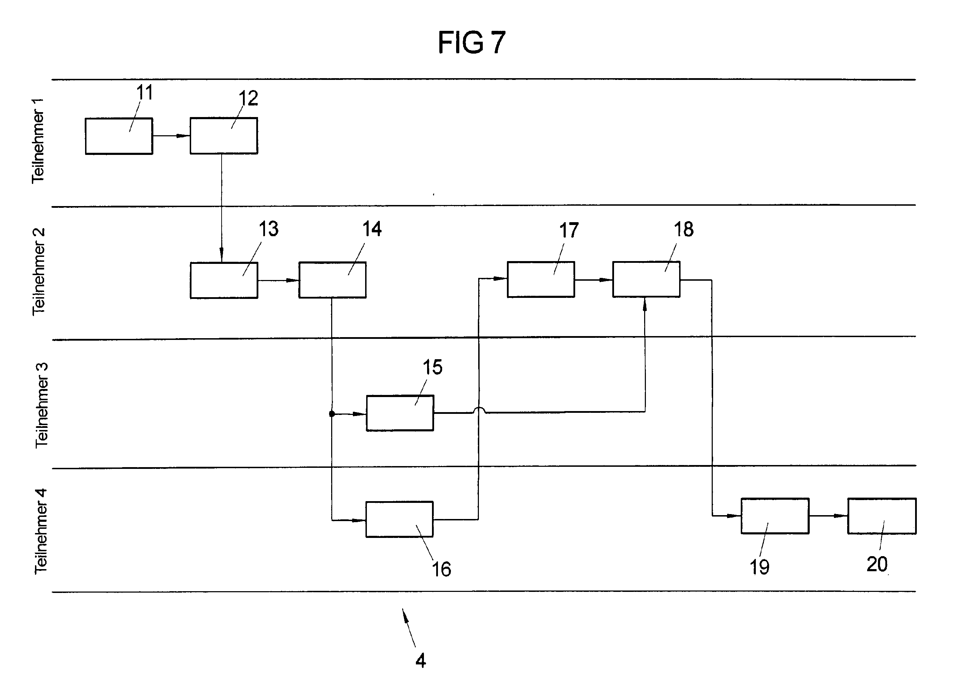

Ein beispielhafter Ablauf eines Prozesses 4, in dessen Rahmen strukturierte Datensätze 11-20 ausgetauscht werden, ist in Fig. 7 dargestellt. Bei diesem beispielhaften Prozess 4 erfolgt ein Austausch strukturierter Datensätze 11-20 zwischen vier Teilnehmern (Teilnehmer 1, Teilnehmer 2, Teilnehmer 3, Teilnehmer 4), die beispielsweise Teilnehmer an einem elektronischen Marktplatz entsprechend dem in Fig. 3 dargestellten Szenario, aber auch unterschiedliche eine Maschine steuernde Computersysteme einer Produktionsanlage sein können. Im Rahmen des Prozesses werden hierbei strukturierte Datensätze 11-20 zwischen den Teilnehmern ausgetauscht, wobei Teilnehmer 1 beispielsweise strukturierte Datensätze 11, 12 sendet, daraufhin Teilnehmer 2 strukturierte Datensätze 13, 14 erzeugt, auf die Teilnehmer 3 und Teilnehmer 4 mit strukturierten Datensätzen 15, 16 reagieren, auf die wiederum Teilnehmer 2 strukturierte Datensätze 17, 18 erstellt, die wiederum von Teilnehmer 4 durch strukturierte Datensätze 19, 20 beantwortet werden. Das die Erfindung verwirklichende Computersystem setzt die strukturierten Datensätze 11-20 anhand der in den strukturierten Datensätzen 11-20 enthaltenden Kenninformationen zusammen, erzeugt durch die Verknüpfung der strukturierten Datensätze 11-20 eine zusammenhängende Datenstruktur, in dessen Rahmen auch sämtliche möglichen Verzweigungen dargestellt sein können, und bildet somit ein Gesamtbild des Prozesses 4 ab. Durch Versendung des erfindungsgemäßen Computersystems ist es hierbei möglich, den Prozess auf automatische Weise zu erfassen und automatisiert nachfolgend durchzuführende Prozessschritte zu identifizieren, so dass der Prozess unter Verwendung des Computersystems vollständig automatisch ablaufen kann. Gleichzeitig ist eine automatisierte Auswertung des Prozesses 4 möglich, wobei der Prozess vollständig durch die in den strukturierten Datensätzen 11-20 enthaltenen Kenninformationen beschrieben und durch die Verknüpfung der strukturierten Datensätze 11-20 dargestellt. Die Verknüpfung der strukturierten Datensätze 11-20 erfolgt hierbei sowohl durch eine zeitliche Verknüpfung als auch durch eine inhaltliche Verknüpfung anhand der in den strukturierten Datensätzen 11-20 enthaltenen Kenninformationen.

Häufig ist für einen Prozess der zeitliche Ablauf wesentlich. Durch die Verknüpfung der strukturierten Datensätze ist dieser Ablauf konkret darstellbar und messbar, wobei anhand der Auswertung der strukturierten Datensätze die Teilnehmer des Prozesses ermittelt, die Prozessschritte identifiziert und der Prozess somit analysiert wird. Insbesondere können somit aus der Verknüpfung der strukturierten Datensätze bestehende Prozesse erkannt und bisher unbekannte Prozesse ermittelt und erfasst werden. Das zur Durchführung verwendete Computersystem kann hierbei selbstlernend sein, so dass das Computersystem neue Prozesse automatisch erkennt und abspeichert und sich die Menge der bekannten Prozesse auf dynamische Weise erhöht.

Durch die Auswertung und Verknüpfung der strukturierten Datensätze können somit Prozesse identifiziert und optimiert werden. Zudem ist eine automatische Archivierung der strukturierten Datensätze anhand der Auswertung der Prozesse möglich. Wird beispielsweise anhand der Auswertung festgestellt, dass ein Prozess abgeschlossen ist, so können automatisch alle mit dem Prozess zusammenhängenden strukturierten Datensätze in ein Archiv verschoben werden, so dass ein effizientes Speichermanagement möglich ist.

Angewandt auf einen Verkaufsprozess, beispielsweise zur Unterstützung und Abwicklung von Verkaufsprozessen auf elektronischen Marktplätzen, können das erfindungsgemäße Verfahren und das erfindungsgemäße Computersystem analog zum oben Ausgeführten eingesetzt werden, um die ablaufenden Prozesse abzubilden und messbar zu machen. Insbesondere ergibt sich somit die Möglichkeit einer vollständigen und automatischen kaufmännischen Auswertung ablaufender Prozesse, in deren Rahmen Kundendaten erfasst, bewertet und gespeichert werden und die Prozesse anhand der Kundendaten optimiert und beeinflusst werden können und auf spezifische Weise zur Ermittlung eines Kundenwertes (beispielsweise anhand einer Einteilung der Kunden in "gute" und "schlechte" Kunden anhand von Kriterien wie Zahlungskräftigkeit, Vertrauenswürdigkeit und Zuverlässigkeit) ausgewertet werden. Gleichermaßen ist auch eine allgemeine, statistische Auswertung der Gesamtheit der ablaufenden Prozesse möglich, beispielsweise um Umsatzvolumina zu ermitteln, Nachfragespitzen nach bestimmten Artikeln zu erfassen, Lieferengpässe zu identifizieren und Zulieferer zu überwachen.

Wesentlicher Vorteil des erfindungsgemäßen Gegenstands ist, dass die Auswertung vollkommen automatisch anhand der ohnehin im Rahmen des Prozesses ausgetauschten strukturierten Datensätze erfolgen kann und somit die Fehleranfälligkeit verringert und die Effizienz der Auswertung erheblich gesteigert werden kann. In vielen Fällen ermöglicht das vorgestellte Verfahren, durchgeführt auf dem erfindungsgemäßen Computersystem, auch erst eine Auswertung der Vielzahl der Daten, insbesondere bei Prozessen mit einer Vielzahl von Teilnehmern und einer Vielzahl von Prozessschritten. Durch das Verfahren können solche Prozesse somit beschleunigt werden und, beispielsweise bei Verwendung des Verfahrens für ein automatisches Speichermanagement zur Archivierung der im Rahmen eines Prozesses ausgetauschten strukturierten Datensätze, Ressourcen geschont werden.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Vorrichtung und dem erfindungsgemäßen Verfahren auch bei grundsätzlich anders gearteten Ausführungen Gebrauch machen.

### Bezugszeichenliste

- 1: Strukturierter Datensatz
- 11-20: Strukturierte Datensätze
- 2: Standardisierter Teil
- 3: Nicht-standardisierter Teil
- 4: Prozess
- 100, 200, 300, 400: Computersystem
- 110,210,310,410: Mailserver
- 120: Datenbank
- 130: Analyseeinrichtung
- 131: Mittel zur Analyse
- 132: Mittel zur Klassifikation
- 133: Mittel zur Auswertung
- 140: Ausgabeeinheit
- 150: Benachrichtigungssystem
- 340: Webbrowser
- K: Käufer
- VK: Verkäufer
- MPB: Marktplatzbetreiber
- MPT: Marktplatzteilnehmer

## Patentansprüche

1. Computersystem zur Verarbeitung eines strukturierten Datensatzes, mit
- einer Kommunikationseinrichtung zum Abrufen und Versenden des strukturierten Datensatzes,
- einer Datenbankeinrichtung zum Speichern des strukturierten Datensatzes,
- einer Analyseeinrichtung zum Verarbeiten des strukturierten Datensatzes,
wobei der strukturierte Datensatz eine Anzahl von in beliebiger Weise im strukturierten Datensatz angeordneten Kenninformationen enthält,
**dadurch gekennzeichnet,**
**dass** die Analyseeinrichtung (130)
- Mittel zur automatischen Analyse (131) der im strukturierten Datensatz (1, 11-20) enthaltenen Kenninformationen,
- Mittel zur automatischen Klassifizierung (132) des strukturierten Datensatzes (1, 11-20), mittels derer der strukturierte Datensatz (1, 11-20) anhand der Kenninformationen in eine Klasse einteilbar ist, und
- Mittel zur automatischen Auswertung (133) des in eine Klasse eingeteilten strukturierten Datensatzes (1, 11-20), mittels derer der strukturierte Datensatz (1, 11-20) anhand der Kenninformationen mit anderen strukturierten Datensätzen (1, 11-20) derselben oder anderer Klassen verknüpfbar ist,
aufweist.

2. Computersystem zur Verarbeitung eines strukturierten Datensatzes nach einem der Anspruch 1, **dadurch gekennzeichnet, dass** das Computersystem (100) eine Schnittstelle zur Auswertung von strukturierten Datensätzen (1, 11-20) zwischen einem zweiten Computersystem (200, 300, 400), von dem der strukturierte Datensatz (1, 11-20) oder eine Menge von strukturierten Datensätzen (1, 11-20) abgerufen werden, und einem dritten Computersystem (200, 300, 400), an das die verknüpften strukturierten Datensätze (1, 11-20) zusammen mit ausgewerteten, einen Prozess beschreibenden Informationen übermittelt werden, darstellt.

3. Computersystem zur Verarbeitung eines strukturierten Datensatzes nach Anspruch 1 oder 2, **dadurch gekennzeichnet, dass** die Kommunikationseinrichtung (110) durch einen ein Mail-Server, ein FTP-Server oder eine andere Einrichtung zur Übermittlung elektronischer Daten ausgebildet ist.

4. Computersystem zur Verarbeitung eines strukturierten Datensatzes nach einem der Ansprüche 1 bis 3, **dadurch gekennzeichnet, dass** die Analyseeinrichtung (130) Mittel zur Auswertung (133) der verknüpften strukturierten Datensätze (1, 11-20) aufweist.

5. Computersystem zur Verarbeitung eines strukturierten Datensatzes nach einem der vorangehenden Ansprüche, **dadurch gekennzeichnet, dass** das Computersystem (100) eine Ausgabeeinheit (140) zur Darstellung der verknüpften strukturierten Datensätze (1, 11-20) aufweist.

6. Computersystem zur Verarbeitung eines strukturierten Datensatzes nach Anspruch 5, **dadurch gekennzeichnet, dass** die Ausgabeeinheit (140) durch einen Web-Server ausgebildet ist.

7. Computersystem zur Verarbeitung eines strukturierten Datensatzes nach einem der vorangehenden Ansprüche, **dadurch gekennzeichnet, dass** das Computersystem (100) ein Benachrichtigungssystem (150) zur Benachrichtigung eines Anwenders bei Auftreten eines anhand der verknüpften strukturierten Datensätze (1, 11-20) ermittelten Fehlers in einem durch die verknüpften strukturierten Datensätze (1, 11-20) dargestellten Prozess (4) aufweist.

8. Computersystem zur Verarbeitung eines strukturierten Datensatzes nach Anspruch 7, **dadurch gekennzeichnet, dass** das Benachrichtigungssystem (150) durch eine Telekommunikationseinrichtung zur Kommunikation mit einem Anwender ausgebildet ist.

9. Verfahren zur Verarbeitung eines strukturierten Datensatzes, unter Verwendung eines Computersystems nach einem der Ansprüche 1 bis 8, bei dem der strukturierte Datensatz abgerufen, gespeichert und verarbeitet wird, wobei der strukturierte Datensatz eine Anzahl von in beliebiger Weise im strukturierten Datensatz angeordneten Kenninformationen enthält,
**dadurch gekennzeichnet, dass**
- die im strukturierten Datensatz (1, 11-20) enthaltenen Kenninformationen automatisch erfasst werden,
- der strukturierte Datensatz (1, 11-20) anhand der Kenninformationen automatisch einer Klasse zugeordnet wird, und
- der strukturierten Datensatz (1, 11-20) anhand der Kenninformationen automatisch mit anderen strukturierten Datensätzen (1, 11-20) verknüpft wird.

10. Verfahren zur Verarbeitung eines strukturierten Datensatzes nach Anspruch 9, **dadurch gekennzeichnet, dass** der strukturierte Datensatz (1, 11-20) einen standardisierten strukturierten Teil (2), in dem Kenninformationen in definierter Weise angeordnet sind, und einen nicht-standardisierten strukturierten Teil (3), in dem Kenninformationen in beliebiger Weise angeordnet sind, aufweist.

11. Verfahren zur Verarbeitung eines strukturierten Datensatzes nach Anspruch 9 oder 10, **dadurch gekennzeichnet, dass** der strukturierte Datensatz (1, 11-20) zur Erfassung der im strukturierten Datensatz (1, 11-20) enthaltenen Kenninformationen in seinen standardisierten strukturierten Teil (2) und seinen nicht-standardisierten strukturierten Teil (3) zerlegt wird.

12. Verfahren zur Verarbeitung eines strukturierten Datensatzes nach Anspruch 11, **dadurch gekennzeichnet, dass** die in dem standardisierten strukturierten Teil (2) und dem nicht-standardisierten strukturierten Teil (3) des strukturierten Datensatzes (1, 11-20) enthaltenen Kenninformationen getrennt ausgewertet werden.

13. Verfahren zur Verarbeitung eines strukturierten Datensatzes nach einem der Ansprüche 9 bis 12, **dadurch gekennzeichnet, dass** der strukturierte Datensatz (1, 11-20) anhand der Kenninformationen automatisch einer Klasse zugeordnet wird, die einen Prozessschritt eines Prozesses (4) charakterisiert.

14. Verfahren zur Verarbeitung eines strukturierten Datensatzes nach einem der Ansprüche 9 bis 13, **dadurch gekennzeichnet, dass** der strukturierte Datensatz (1, 11-20) derart mit anderen strukturierten Datensätzen (1, 11-20) verknüpft wird, dass sich eine zusammenhängende Datensatzstruktur in Form einer Kette ergibt.

15. Verfahren zur Verarbeitung eines strukturierten Datensatzes nach Anspruch 14, **dadurch gekennzeichnet, dass** die Ketten verzweigte Ketten darstellen.

16. Verfahren zur Verarbeitung eines strukturierten Datensatzes nach einem der Ansprüche 9 bis 15, **dadurch gekennzeichnet, dass** die verknüpften strukturierten Datensätze (1, 11-20) mindestens einen Prozess (4), der einen oder mehrere Prozessschritte umfasst, darstellen.

17. Verfahren zur Verarbeitung eines strukturierten Datensatzes nach einem der Ansprüche 9 bis 16, **dadurch gekennzeichnet, dass** anhand der verknüpften strukturierten Datensätze (1, 11-20) und der in den strukturierten Datensätzen (1, 11-20) enthaltenen Kenninformationen mindestens ein Prozess (4) identifiziert wird.

18. Verfahren zur Verarbeitung eines strukturierten Datensatzes nach einem der Ansprüche 16 oder 17, **dadurch gekennzeichnet, dass** anhand der verknüpften strukturierten Datensätze (1, 11-20) und der in den strukturierten Datensätzen (1, 11-20) enthaltenen Kenninformationen der mindestens eine Prozess (4) zur Erfassung von den Prozess (4) beschreibenden Informationen ausgewertet wird.

19. Verfahren zur Verarbeitung eines strukturierten Datensatzes nach Anspruch 18, **dadurch gekennzeichnet, dass** abhängig von der Auswertung des Prozesses (4) die den Prozess (4) darstellenden verknüpften strukturierten Datensätze (1, 11-20) gespeichert, gelöscht und / oder weiterverarbeitet werden.

20. Verfahren zur Verarbeitung eines strukturierten Datensatzes nach einem der Ansprüche 16 bis 19, **dadurch gekennzeichnet, dass** anhand der verknüpften strukturierten Datensätze (1, 11-20) und der in den strukturierten Datensätzen (1, 11-20) enthaltenen Kenninformationen der mindestens eine Prozess (4) mit vorab definierten Normwerten verglichen wird.

21. Verfahren zur Verarbeitung eines strukturierten Datensatzes nach einem der Ansprüche 16 bis 20, **dadurch gekennzeichnet, dass** ein nachfolgend durchzuführender Prozessschritt automatisch identifiziert wird.

22. Verfahren zur Verarbeitung eines strukturierten Datensatzes nach einem der Ansprüche 16 bis 21, **dadurch gekennzeichnet, dass** anhand der verknüpften strukturierten Datensätze (1, 11-20) und der in den strukturierten Datensätzen (1, 11-20) enthaltenen Kenninformationen der mindestens eine Prozess (4) hinsichtlich mindestens eines Optimierungskriteriums optimiert wird.

23. Verfahren zur Verarbeitung eines strukturierten Datensatzes nach Anspruch 22, **dadurch gekennzeichnet, dass** die Prozessdauer, die Prozessgeschwindigkeit und / oder der Prozessablauf Optimierungskriterien darstellen.

24. Verfahren zur Verarbeitung eines strukturierten Datensatzes nach einem der Ansprüche 16 bis 23, **dadurch gekennzeichnet, dass** anhand der verknüpften strukturierten Datensätze (1, 11-20) Fehler oder Besonderheiten in dem mindestens einen Prozess (4) ermittelt werden.

25. Verfahren zur Verarbeitung eines strukturierten Datensatzes nach einem der Ansprüche 16 bis 24, **dadurch gekennzeichnet, dass** anhand der verknüpften strukturierten Datensätze (1, 11-20) ein einzelner Prozess (4) hinsichtlich seiner spezifischen Merkmale oder eine Vielzahl von Prozessen (4) hinsichtlich ihrer statistischen Merkmale ausgewertet werden.

26. Verfahren zur Verarbeitung eines strukturierten Datensatzes nach einem der Ansprüche 9 bis 25, **dadurch gekennzeichnet, dass** anhand der erfassten Kenninformationen die Struktur des strukturierten Datensatzes (1, 11-20) erlernt und abgespeichert wird.

27. Verfahren zur Verarbeitung eines strukturierten Datensatzes nach einem der Ansprüche 9 bis 26, **dadurch gekennzeichnet, dass** ein strukturierter Datensatz, (1, 11-20) der keiner Klasse zuordbar ist, einer automatisch neu generierten Klassen zugeordnet wird.

28. Verfahren zur Verarbeitung eines strukturierten Datensatzes nach einem der Ansprüche 9 bis 27, **dadurch gekennzeichnet, dass** die verknüpften strukturierten Datensätze (1, 11-20), die keinem Prozess (4) zuordbar sind, einem automatisch neu generierten Prozess (4) zugeordnet werden.

29. Computerprogramm zur Verarbeitung eines strukturierten Datensatzes aus einer Menge von strukturierten Datensätzen, zum Durchführung des Verfahrens nach einem der Ansprüche 9 bis 28.

## Geänderte Patentansprüche

### Geänderte Patentansprüche gemäss Regel 86(2) EPÜ.

**1.** Computersystem (100) zur Verarbeitung eines strukturierten Datensatzes (1, 11-20), mit
- einer Kommunikationseinrichtung (110) zum Abrufen und Versenden des strukturierten Datensatzes (1, 11-20),
- einer Datenbankeinrichtung (120) zum Speichern des strukturierten Datensatzes (1, 11-20),
- einer Analyseeinrichtung (130) zum Verarbeiten des strukturierten Datensatzes, wobei der strukturierte Datensatz (1, 11-20) eine Anzahl von in beliebiger Weise im strukturierten Datensatz angeordneten Kenninformationen enthält und die Analyseeinrichtung (130)
- Mittel zur automatischen Analyse (131) der im strukturierten Datensatz (1, 11-20) enthaltenen Kenninformationen und
- Mittel zur automatischen Klassifizierung (132) des strukturierten Datensatzes (1, 11-20), mittels derer der strukturierte Datensatz (1, 11-20) anhand der Kenninformationen in eine einen Prozessschritt eines Prozesses beschreibende Klasse einteilbar ist,
aufweist,
**dadurch gekennzeichnet,**
**dass** die Analyseeinrichtung (130) zusätzlich
- Mittel zur automatischen Auswertung (133) des in eine Klasse eingeteilten strukturierten Datensatzes (1, 11-20), mittels derer der strukturierte Datensatz (1, 11-20) anhand der Kenninformationen mit anderen strukturierten Datensätzen (1, 11-20) derselben oder anderer Klassen verknüpfbar ist,
aufweist, wobei die Mittel zur automatischen Auswertung (133) ausgebildet sind, anhand der Verknüpfung der strukturierten Datensätze (1, 11-20) einen Prozess zu identifizieren und die unterschiedlichen verknüpften strukturierten Datensätze (1, 11-20) dem Prozess zuzuordnen.

**2.** Computersystem zur Verarbeitung eines strukturierten Datensatzes nach einem der Anspruch 1, **dadurch gekennzeichnet, dass** das Computersystem (100) eine Schnittstelle zur Auswertung von strukturierten Datensätzen (1, 11-20) zwischen einem zweiten Computersystem (200, 300, 400), von dem der strukturierte Datensatz (1, 11-20) oder eine Menge von strukturierten Datensätzen (1, 11-20) abgerufen werden, und einem dritten Computersystem (200, 300, 400), an das die verknüpften strukturierten Datensätze (1, 11-20) zusammen mit ausgewerteten, einen Prozess beschreibenden Informationen übermittelt werden, darstellt.

**3.** Computersystem zur Verarbeitung eines strukturierten Datensatzes nach Anspruch 1 oder 2, **dadurch gekennzeichnet, dass** die Kommunikationseinrichtung (110) durch einen ein Mail-Server, ein FTP-Server oder eine andere Einrichtung zur Übermittlung elektronischer Daten ausgebildet ist.

**4.** Computersystem zur Verarbeitung eines strukturierten Datensatzes nach einem der vorangehenden Ansprüche, **dadurch gekennzeichnet, dass** das Computersystem (100) eine Ausgabeeinheit (140) zur Darstellung der verknüpften strukturierten Datensätze (1, 11-20) aufweist.

**5.** Computersystem zur Verarbeitung eines strukturierten Datensatzes nach Anspruch 4, **dadurch gekennzeichnet, dass** die Ausgabeeinheit (140) durch einen Web-Server ausgebildet ist.

**6.** Computersystem zur Verarbeitung eines strukturierten Datensatzes nach einem der vorangehenden Ansprüche, **dadurch gekennzeichnet, dass** das Computersystem (100) ein Benachrichtigungssystem (150) zur Benachrichtigung eines Anwenders bei Auftreten eines anhand der verknüpften strukturierten Datensätze (1, 11-20) ermittelten Fehlers in einem durch die verknüpften strukturierten Datensätze (1, 11-20) dargestellten Prozess (4) aufweist.

**7.** Computersystem zur Verarbeitung eines strukturierten Datensatzes nach Anspruch 7, **dadurch gekennzeichnet, dass** das Benachrichtigungssystem (150) durch eine Telekommunikationseinrichtung zur Kommunikation mit einem Anwender ausgebildet ist.

**8.** Verfahren zur Verarbeitung eines strukturierten Datensatzes (1, 11-20), unter Verwendung eines Computersystems (100) nach einem der Ansprüche 1 bis 7, bei dem der strukturierte Datensatz (1, 11-20) abgerufen, gespeichert und verarbeitet wird, wobei der strukturierte Datensatz (1, 11-20) eine Anzahl von in beliebiger Weise im strukturierten Datensatz (1, 11-20) angeordneten Kenninformationen enthält, wobei
- die im strukturierten Datensatz (1, 11-20) enthaltenen Kenninformationen automatisch erfasst werden und
- der strukturierte Datensatz (1, 11-20) anhand der Kenninformationen automatisch einer einen Prozessschritt eines Prozesses beschreibenden Klasse zugeordnet wird,
**dadurch gekennzeichnet,**
**dass** der strukturierte Datensatz (1, 11-20) anhand der Kenninformationen automatisch mit anderen strukturierten Datensätzen (1, 11-20) verknüpft wird, anhand der Verknüpfung der strukturierten Datensätze (1, 11-20) ein Prozess identifiziert wird und die verknüpften strukturierten Datensätze (1, 11-20) dem Prozess zugeordnet werden.

**9.** Verfahren zur Verarbeitung eines strukturierten Datensatzes nach Anspruch 8, **dadurch gekennzeichnet, dass** der strukturierte Datensatz (1, 11-20) einen standardisierten strukturierten Teil (2), in dem Kenninformationen in definierter Weise angeordnet sind, und einen nicht-standardisierten strukturierten Teil (3), in dem Kenninformationen in beliebiger Weise angeordnet sind, aufweist.

**10.** Verfahren zur Verarbeitung eines strukturierten Datensatzes nach Anspruch 8 oder 9, **dadurch gekennzeichnet, dass** der strukturierte Datensatz (1, 11-20) zur Erfassung der im strukturierten Datensatz (1, 11-20) enthaltenen Kenninformationen in seinen standardisierten strukturierten Teil (2) und seinen nicht-standardisierten strukturierten Teil (3) zerlegt wird.

**11.** Verfahren zur Verarbeitung eines strukturierten Datensatzes nach Anspruch 10, **dadurch gekennzeichnet, dass** die in dem standardisierten strukturierten Teil (2) und dem nicht-standardisierten strukturierten Teil (3) des strukturierten Datensatzes (1, 11-20) enthaltenen Kenninformationen getrennt ausgewertet werden.

**12.** Verfahren zur Verarbeitung eines strukturierten Datensatzes nach einem der Ansprüche 8 bis 11, **dadurch gekennzeichnet, dass** der strukturierte Datensatz (1, 11-20) anhand der Kenninformationen automatisch einer Klasse zugeordnet wird, die einen Prozessschritt eines Prozesses (4) charakterisiert.

**13.** Verfahren zur Verarbeitung eines strukturierten Datensatzes nach einem der Ansprüche 8 bis 12, **dadurch gekennzeichnet, dass** der strukturierte Datensatz (1, 11-20) derart mit anderen strukturierten Datensätzen (1, 11-20) verknüpft wird, dass sich eine zusammenhängende Datensatzstruktur in Form einer Kette ergibt.

**14.** Verfahren zur Verarbeitung eines strukturierten Datensatzes nach Anspruch 13, **dadurch gekennzeichnet, dass** die Ketten verzweigte Ketten darstellen.

**15.** Verfahren zur Verarbeitung eines strukturierten Datensatzes nach einem der Ansprüche 8 bis 14, **dadurch gekennzeichnet, dass** die verknüpften strukturierten Datensätze (1, 11-20) mindestens einen Prozess (4), der einen oder mehrere Prozessschritte umfasst, darstellen.

**16.** Verfahren zur Verarbeitung eines strukturierten Datensatzes nach Anspruch 15, **dadurch gekennzeichnet, dass** anhand der verknüpften strukturierten Datensätze (1, 11-20) und der in den strukturierten Datensätzen (1, 11-20) enthaltenen Kenninformationen der mindestens eine Prozess (4) zur Erfassung von den Prozess (4) beschreibenden Informationen ausgewertet wird.

**17.** Verfahren zur Verarbeitung eines strukturierten Datensatzes nach Anspruch 16, **dadurch gekennzeichnet, dass** abhängig von der Auswertung des Prozesses (4) die den Prozess (4) darstellenden verknüpften strukturierten Datensätze (1, 11-20) gespeichert, gelöscht und / oder weiterverarbeitet werden.

**18.** Verfahren zur Verarbeitung eines strukturierten Datensatzes nach einem der Ansprüche 15 bis 17, **dadurch gekennzeichnet, dass** anhand der verknüpften strukturierten Datensätze (1, 11-20) und der in den strukturierten Datensätzen (1, 11-20) enthaltenen Kenninformationen der mindestens eine Prozess (4) mit vorab definierten Normwerten verglichen wird.

**19.** Verfahren zur Verarbeitung eines strukturierten Datensatzes nach einem der Ansprüche 15 bis 18, **dadurch gekennzeichnet, dass** ein nachfolgend durchzuführender Prozessschritt automatisch identifiziert wird.

**20.** Verfahren zur Verarbeitung eines strukturierten Datensatzes nach einem der Ansprüche 15 bis 19, **dadurch gekennzeichnet, dass** anhand der verknüpften strukturierten Datensätze (1, 11-20) und der in den strukturierten Datensätzen (1, 11-20) enthaltenen Kenninformationen der mindestens eine Prozess (4) hinsichtlich mindestens eines Optimierungskriteriums optimiert wird.

**21.** Verfahren zur Verarbeitung eines strukturierten Datensatzes nach Anspruch 20, **dadurch gekennzeichnet, dass** die Prozessdauer, die Prozessgeschwindigkeit und /oder der Prozessablauf Optimierungskriterien darstellen.

**22.** Verfahren zur Verarbeitung eines strukturierten Datensatzes nach einem der Ansprüche 15 bis 21, **dadurch gekennzeichnet, dass** anhand der verknüpften strukturierten Datensätze (1, 11-20) Fehler oder Besonderheiten in dem mindestens einen Prozess (4) ermittelt werden.

**23.** Verfahren zur Verarbeitung eines strukturierten Datensatzes nach einem der Ansprüche 15 bis 22, **dadurch gekennzeichnet, dass** anhand der verknüpften strukturierten Datensätze (1, 11-20) ein einzelner Prozess (4) hinsichtlich seiner spezifischen Merkmale oder eine Vielzahl von Prozessen (4) hinsichtlich ihrer statistischen Merkmale ausgewertet werden.

**24.** Verfahren zur Verarbeitung eines strukturierten Datensatzes nach einem der Ansprüche 8 bis 23, **dadurch gekennzeichnet, dass** anhand der erfassten Kenninformationen die Struktur des strukturierten Datensatzes (1, 11-20) erlernt und abgespeichert wird.

**25.** Verfahren zur Verarbeitung eines strukturierten Datensatzes nach einem der Ansprüche 8 bis 24, **dadurch gekennzeichnet, dass** ein strukturierter Datensatz, (1, 11-20) der keiner Klasse zuordbar ist, einer automatisch neu generierten Klassen zugeordnet wird.

**26.** Verfahren zur Verarbeitung eines strukturierten Datensatzes nach einem der Ansprüche 8 bis 25, **dadurch gekennzeichnet, dass** die verknüpften strukturierten Datensätze (1, 11-20), die keinem Prozess (4) zuordbar sind, einem automatisch neu generierten Prozess (4) zugeordnet werden.

**27.** Computerprogramm zur Verarbeitung eines strukturierten Datensatzes aus einer Menge von strukturierten Datensätzen, zur Durchführung des Verfahrens nach einem der Ansprüche 8 bis 26.
